**Europäisches Patentamt**

**European Patent Office**

**Office européen des brevets**

(19)

(11) Veröffentlichungsnummer : **0 187 787**
**B1**

(12) **EUROPÄISCHE PATENTSCHRIFT**

(45) Veröffentlichungstag der Patentschrift :
**11.01.89**

(51) Int. Cl.⁴ : **B 01 D 53/36**, B 01 D 53/34

(21) Anmeldenummer : **85903250.0**

(22) Anmeldetag : **19.06.85**

(86) Internationale Anmeldenummer :
**PCT/EP 85/00295**

(87) Internationale Veröffentlichungsnummer :
**WO/8600243 (16.01.86 Gazette 86/02)**

(54) **VERFAHREN ZUR ABSCHEIDUNG VON SO₂ UND NOₓ**

(30) Priorität : **28.06.84 DE 3423744**
**28.06.84 DE 3423761**
**16.08.84 DE 3429999**

(43) Veröffentlichungstag der Anmeldung :
**23.07.86 Patentblatt 86/30**

(45) Bekanntmachung des Hinweises auf die Patenterteilung : **11.01.89 Patentblatt 89/02**

(84) Benannte Vertragsstaaten :
**AT CH DE FR GB IT LI NL SE**

(56) Entgegenhaltungen :
**DE–A– 3 014 934**
**DE–A– 3 101 053**
**DE–C– 3 220 403**
**FR–A– 2 197 629**
**FR–A– 2 290 242**

(73) Patentinhaber : **Bergwerksverband GmbH**
**Franz-Fischer-Weg 61**
**D-4300 Essen 13 (DE)**

(72) Erfinder : **JÜNTGEN, Harald**
**Bonscheidterstrasse 79**
**D-4300 Essen (DE)**
Erfinder : **PETERS, Werner**
**Langacker 5**
**D-4630 Bochum 6 (DE)**
Erfinder : **KNOBLAUCH, Karl**
**Semperstrasse 55**
**D-4300 Essen (DE)**
Erfinder : **RICHTER, Ekkehard**
**Schmachtenbergstrasse 89**
**D-4300 Essen 18 (DE)**
Erfinder : **GROCHOWSKI, Horst**
**Hafenstrasse**
**D-4200 Oberhausen (DE)**

**Beschreibung**

Die Erfindung betrifft ein Verfahren zur Abscheidung von $SO_2$ und $NO_x$ gemäß dem Oberbegriff des Anspruchs 1 sowie einen Reaktor zur Durchführung des Verfahrens.

Dabei wird auf ein an sich bekanntes Verfahren zur Stickoxidabtrennung zurückgegriffen, bei dem die Stickoxide durch eine katalytische Reaktion an Aktivkohlen/Aktivkoksen bei Temperaturen zwischen 100 und 170 °C unter Ammoniakzugabe zu Stickstoff und Wasserdampf reduziert werden. Das im Rauchgas enthaltene $SO_2$ wird adsorptiv von der Aktivkohle/dem Aktivkoks aufgenommen. Ein Teil des $SO_2$ reagiert daneben mit dem Ammoniak zu Ammoniumsalz. Diese Reaktion erfolgt bevorzugt gegenüber der Reduzierung von Stickoxiden zu Stickstoff und Wasserdampf. Diese Gesetzmäßigkeiten werden in einem speziellen zweistufigen Verfahren zur gleichzeitigen Abscheidung von $SO_2$ und $NO_x$ aus Rauchgasen genutzt. Dabei wird in der ersten Stufe die Hauptmenge des $SO_2$ abgeschieden und in der zweiten Stufe vorzugsweise das $NO_x$ und das Rest-$SO_2$ (E. Richter, K. Knoblauch, H. Jüntgen, VDI-Berichte Nr. 391 (1980), S. 312).

Die beladene Aktivkohle bzw. der beladene Aktivkoks wird von Zeit zu Zeit durch eine vorzugsweise thermische Regeneration reaktiviert. Dabei fällt ein $SO_2$-Reichgas an, das üblicherweise in Weiterverarbeitungsstufen zu Schwefelsäure oder Elementarschwefel umgesetzt wird.

Zur Verminderung von $SO_2$-Emissionen werden bisher hauptsächlich sogenannte Rauchgaswäschen verwendet. Diese sind in der Regel zwischen dem Elektrofilter und dem Kamin angeordnet. Das Rauchgas hat in diesem Bereich etwa eine Temperatur von 120-150 °C. Durch den Waschvorgang erfolgt eine Abkühlung auf 50-70 °C. Damit die Rauchgase ihren thermischen Auftrieb nicht verlieren, werden sie wieder aufgeheizt, beispielsweise in einem Wärmeaustauscher. Die der Wäsche zufließenden Rauchgase geben Wärme an die aus der Wäsche herauskommenden Rauchgase ab, so daß die Rauchgase vor dem Eintritt in den Kamin wieder eine Temperatur von etwa 90 °C haben.

Rauchgaswäschen können gemäß dem Sand der Technik mit unterschiedlichen wäßrigen Lösungen in Wäschern verschiedener Typen durchgeführt werden. Als gebräuchlichste Waschflüssigkeit dienen wäßrige Lösungen von Kalkhydrat oder Kalkstein. In diesen Waschlösungen wird durch chemische Reaktionen des $SO_2$ mit Calcium in der Lösung Calciumsulfit/Calciumsulfat gebildet, aus denen in nachgeschalteten Weiterverarbeitungsstufen handelsfähiger Gips gewonnen werden kann. (W. Kaminsky, Chem.-Ing.-Technik 55 (1983), S. 673 ff).

Es ist heute erwünscht, daß neben dem $SO_2$ auch die Stickoxide weitgehend aus den Abgasen abgeschieden werden. Der Erfindung liegt deshalb ausgehend von einem Verfahren der eingangs genannten Gattung die Aufgabe zugrunde, das Naßwaschverfahren zur Abscheidung von $SO_2$ so weiterzuentwickeln, daß eine $NO_x$-Abscheidung zusätzlich ermöglicht wird.

Diese Aufgabe wird durch die Merkmale des Anspruch 1 gelöst.

Dadurch ist es überraschend gelungen, die Naßentschwefelung mit der Trockenentstickung in optimaler Weise dadurch aufeinander abzustimmen, daß die nasse $SO_2$-Abscheidung zunächst nur für einen Teil des Rauchgases und zwar den größeren Teil vorgenommen wird, während ein kleinerer Rauchgas-Teilstrom die Wäsche im Bypaß umgeht und zur zusätzlichen Aufheizung des Rauchgas-Hauptstromes genutzt wird, so daß die eine etwas höhere Temperatur erfordernde katalytische $NO_x$-Abscheidung an Aktivkohle/Aktivkoks unter Ammoniakzugabe ermöglicht wird. Das aus dem Teilstrom stammende $SO_2$ sowie das in dem Hauptstrom noch enthaltene Rest-$SO_2$ wird, im wesentlichen adsorptiv, gleichzeitig an die Aktivkohle/den Aktivkoks gebunden, teilweise reagiert das $SO_2$ auch unmittelbar mit dem Ammoniak.

Gemäß einer Weiterbildung kann das bei der thermischen Regeneration der Aktivkohle/des Aktivkokses anfallende $SO_2$-Reichgas seinerseits über die Naßwäsche in den für die Naßentschwefelung üblichen Weiterverarbeitungsablauf integriert werden. Es wird somit die sonst bei der kombinierten trockenen Entschwefelung und Entstickung erforderliche Weiterverarbeitungsstufe zu Schwefelsäure oder Elementarschwefel vermieden.

Die Regeneration der Aktivkohle/des Aktivkokses kann aber auch gemäß einer anderen Weiterbildung in einer Naßwäsche vorgenommen werden. Dadurch ist sowohl eine Rückgewinnung des zur $SO_2$-Bindung genutzten Ammoniaks als auch eine gemeinsame Weiterverarbeitung der Waschflüssigkeiten aus der $SO_2$-Wäsche und der AK-Wäsche zu Gips möglich geworden.

Durch die Erfindung wird ein Weg gewiesen, wie bereits bestehende Naßwäschen für die Entschwefelung mit vergleichsweise geringem Aufwand zu einer kombinierten Entschwefelungs- und Entstickungseinrichtung umgestaltbar sind. Da die Verfahren der Naßentschwefelung bereits einen hohen technischen Stand erreicht haben, ist es durchaus denkbar, daß auch Neuanlagen nach der erfindungsgemäßen Kombination konzipiert werden können.

Gemäß einer anderen Weiterbildung kann die beladene Aktivkohle/der beladene Aktivkoks aus dem Reaktor über ein Sieb geführt und dadurch Ammoniumsulfat abgetrennt und das gereinigte Adsorptionsmittel für den erneuten Einsatz dem Reaktor wieder zugeführt werden.

Weiterbildungen dieser Lösungsvariante sind in den Unteransprüchen 5 bis 7 aufgeführt.

Es wurde überraschend festgestellt, daß die katalytischen Eigenschaften von Aktivkohle/Aktivkoks durch die Nebenreaktionen des $SO_2$ mit Ammoniak und die teilweise Ablagerung der dabei entstehenden Reaktionsprodukte im Porensystem im Hinblick auf die $NO_x$-Zersetzung nicht beeinflußt werden. Durch das Absieben des im Lückenvolumen gebildeten Ammoniumsulfats wird vermieden, daß bei der technischen Durchführung durch die Ablagerungen der Druckverlust in der Schüttung zu stark erhöht und die Entstickung dadurch behindert wird. Das Adsorptionsmittel kann unmittelbar wiederverwendet und im Kreislauf in den Reaktor zurückgeführt werden. Sollten in bestimmten Fällen Restbeladungen durch Ammoniumsulfat störend sein, kann ein Teil des Adsorptionsmittels einer Naßwäsche unterzogen werden, was gegenüber einer kompletten Naßwäsche immer noch erhebliche Einsparungen an Einrichtungen und Energie bewirkt. Das Verfahren kann in im Gleichstrom, oder im Gegenstrom, vorzugsweise aber im Querstrom, angeströmten Wanderschichtreaktor angewendet werden. Das abgesiebte Ammoniumsulfat kann zu Düngemittel weiterverarbeitet werden. Es kann aber auch einer $NH_3$-Rückgewinnung zugeführt werden. Das gleiche gilt dann, wenn ein Teilstrom des Adsorptionsmittels naßgewaschen wird, für das dabei anfallende Waschwasser. Auf diese Weise ist eine umweltfreundliche Entsorgung aller am Verfahren beteiligten Stoffe sichergestellt.

Weitere Vorteile ergeben sich, wenn der Aktivkohle/Aktivkoks-Reaktor zur Durchführung des Verfahrens nach der technischen Lehre des Anspruchs 8 ausgebildet wird. Dabei wird dem Umstand Rechnung getragen, daß bei dem erfindungsgemäßen Verfahren im AK-Reaktor nur das Rest-$SO_2$ aus dem Rauchgas abgeschieden zu werden braucht, nicht das gesamte $SO_2$ wie bei einem ausschließlich trockenen Entschwefelungs- und Entstickungsverfahren unter Verwendung von Aktivkohle/Aktivkoks und Ammoniakzugabe.

Die Erfindung wird nachfolgend anhand der Zeichnung und der Beispiele näher beschrieben. Die Zeichnung zeigt in

Figur 1 eine schematische Darstellung der Verfahrungsführung des kombinierten Entschwefelungs- und Entstickungsverfahrens mit thermischer Regeneration der Aktivkohle/des Aktivkokses

Figur 2 eine schematische Darstellung der Verfahrensführung des kombinierten Entschwefelungs- und Entstickungsverfahrens mit Regeneration der Aktivkohle/des Aktivkokses in einer Naßwäsche

Figur 3 eine schematische Darstellung der Verfahrensführung des kombinierten Entschwefelungs- und Entstickungsverfahrens, bei der die beladene Aktivkohle/der beladene Aktivkoks über ein Sieb geführt wird

Figur 4 eine schematische Darstellung einer Weiterbildung der Arbeitsweise gemäß der Fig. 3, bei der ein Teilstrom des gereinigten Adsorptionsmittels einer Naßwäsche zugeführt wird

Figur 5 einen für die Rest-$SO_2$-Abscheidung besonders geeigneten AK-Reaktor.

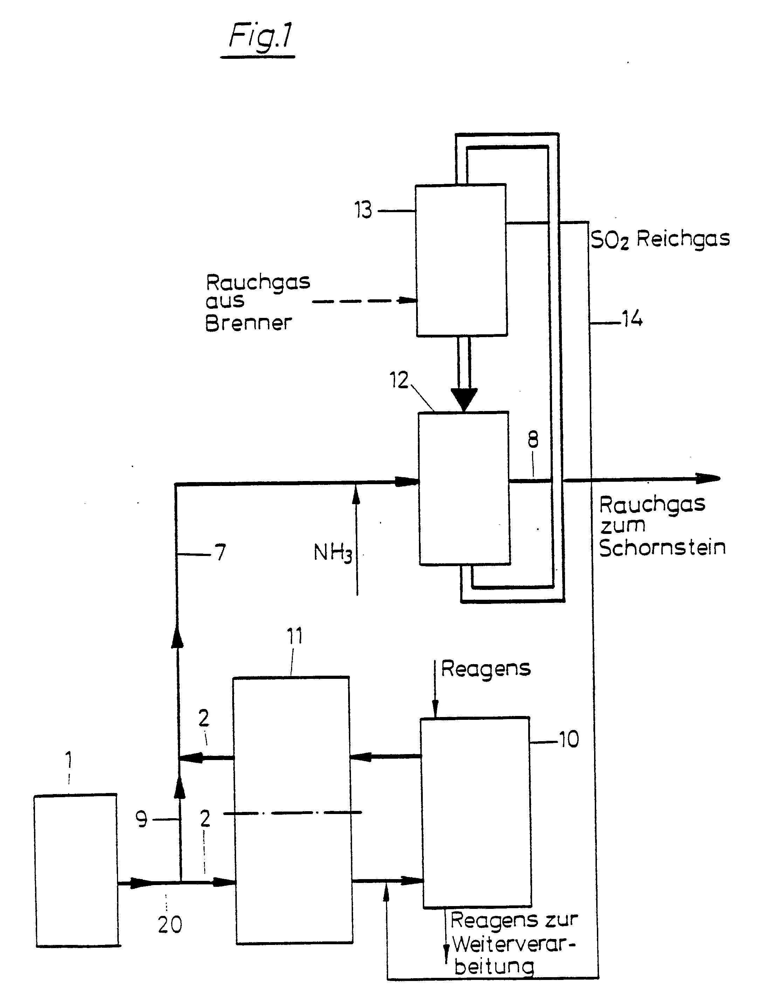

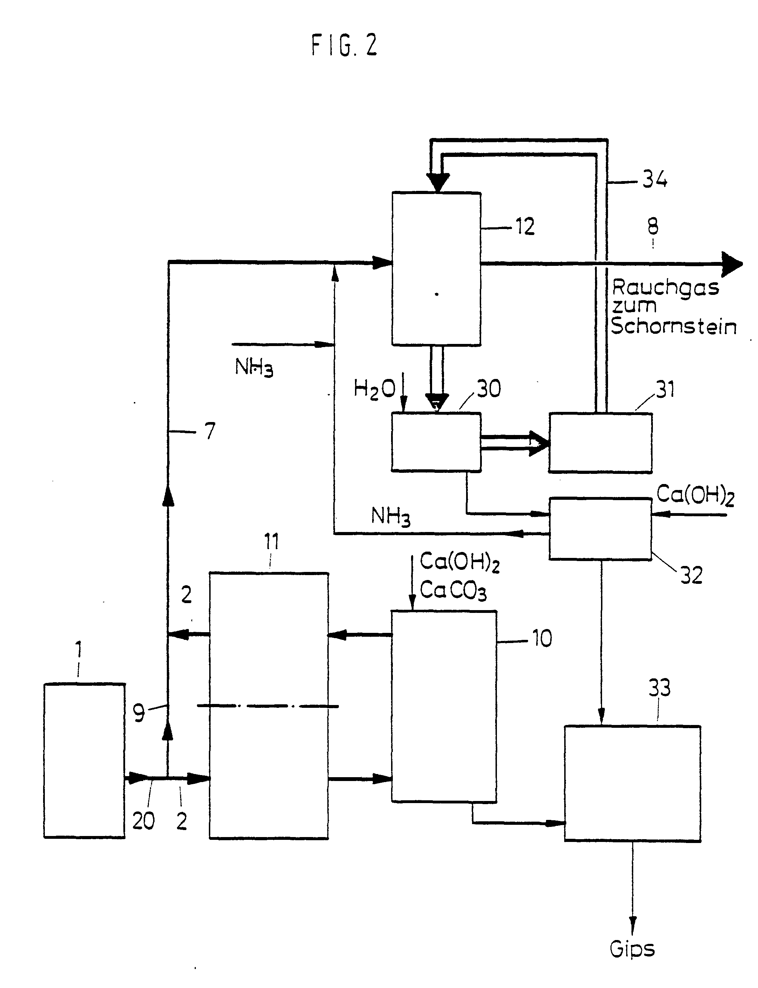

Aus Figur 1 und 2 geht hervor, daß der von einer Feuerung 1 kommende $SO_2$- und $NO_x$-haltige Rauchgasgesamtstrom 20 vor Eintritt in eine Naßwäsche 10 zur Rauchgasentschwefelung in einen Rauchgas-Hauptstrom 2 und einen Rauchgas-Teilstrom 9 aufgeteilt wird. Der Rauchgas-Hauptstrom 2 wird über einen Wärmeaustauscher 11 in die Naßwäsche 10 geführt. Der kleinere Rauchgas-Teilstrom 9 strömt direkt unter Umgehung von Wärmeaustauscher 11 und Naßwäsche 10 zu einem Aktivkoks/Aktivkohle-Reaktor 12 (AK-Reaktor). Vorher wird er mit dem abgekühlten und weitgehend von $SO_2$ sowie teilweise von $NO_x$ befreiten Rauchgas-Hauptstrom 2, nachdem dieser im Wärmeaustauscher 11 wieder aufgeheizt worden ist, vermischt. Die Temperatur des wieder vereinigten Rauchgas-Gesamtstroms 7 nach der Mischung des Rauchgas-Teilstroms 9 und des Rauchgas-Hauptstroms 2 liegt zwar unter der Temperatur des von der Feuerung 1 kommenden Rauchgasgesamtstroms 20, ist aber noch ausreichend für die katalytische $NO_x$-Reduktion an Aktivkohle bzw. Aktivkoks in dem AK-Reaktor 12. Er weist aber einen höheren $SO_2$-Gehalt auf als der weitgehend entschwefelte Rauchgas-Hauptstrom 2. Es hat sich nun überraschenderweise herausgestellt, daß diese Temperaturerhöhung für den Betrieb des AK-Reaktors 12 Vorteile bringt, während aus dem etwas höheren $SO_2$-Gehalt keine Nachteile mit Ausnahme eines etwas höheren Ammoniakverbrauchs resultieren. Außerdem ist es vorteilhaft, daß nur ein verringerter Rauchgasstrom durch die Naßwäsche 10 strömt, in der somit Waschkapazität freibleibt, die anderweitig nutzbar ist, wie weiter unten beschrieben wird.

Der AK-Reaktor 12 wird nach Zugabe von Ammoniak in den vereinigten Rauchgasgesamtstrom 7 zur Simultanentfernung von $NO_x$ und $SO_2$ eingesetzt. Der den AK-Reaktor 12 verlassende gereinigte Rauchgasstrom 8 weist eine geringfügig höhere Temperatur auf als der vereinigte Rauchgasgesamtstrom 7 vor dem AK-Reaktor 12. Das gereinigte Rauchgas ist fast vollständig von $SO_2$ befreit, während die $NO_x$-Verringerung zwischen 20 und über 90 % betragen kann, je nach $NH_3$-Zugabe und Auslegung des AK-Reaktors 12.

Die Aktivkohle/der Aktivkoks im AK-Reaktor 12 wird zunehmend mit Ammoniumhydrogensulfat und Ammoniumsulfat beladen, so daß zumindest ein Teil in zeitlichen Intervallen oder kontinuierlich entnommen und regeneriert werden muß.

Dies wird gemäß Figur 1 in einer AK-Regeneration 13 thermisch durchgeführt. Dabei wird der Aktivkoks bzw. die Aktivkohle in bekannter Weise durch Kontakt mit heißem Sand, durch Kreislaufführung von heißem Reichgas oder durch Verbrennungsabgase aufgeheizt. Das so gewonnene $SO_2$-Reichgas kann gemäß dem derzeitigen Stand der Technik zu Schwefelsäure oder Elementarschwefel in einer gesonderten Einheit weiterverarbeitet werden. Ein besonderer Vorteil des vorgeschlagenen Verfahrens besteht nun darin, daß der $SO_2$-Reichgasstrom 14, dessen Temperatur über 350 °C liegt, dem Rauchgas-Hauptstrom 2, der durch die Naßwäsche 10 strömt, beigegeben wird. Das $SO_2$ aus der Regeneration ($SO_2$-Reichgasstrom 14) wird in der Naßwäsche 10 zusammen mit dem $SO_2$ aus dem Rauchgas-

Hauptstrom 2 abgeschieden. Dadurch erhöht sich der Volumenstrom des Rauchgases geringfügig. Allerdings wird die $SO_2$-Konzentration um 10 bis 40 % vermehrt. Wegen der verringerten Rauchgasmenge des Hauptstromes 2, die durch die Naßwäsche 10 strömt, ist eine ausreichende Kapazität verfügbar, diese zusätzliche $SO_2$-Menge abzuscheiden und somit in den üblichen Weiterverarbeitungsgang, z. B. Aufarbeitung zu Gips, zu integrieren.

Die Regeneration kann auch gemäß Figur 2 durch Auswaschen mit Wasser in einer AK-Wäsche 30 erfolgen. Der Aktivkoks/die Aktivkohle muß vor dem Wiedereinsatz im AK-Reaktor 12 in einer gesonderten AK-Trocknung 31 von Wasser befreit werden. Die Waschlösung aus der AK-Wäsche 30 enthält neben Ammoniumsulfat auch Ammoniumhydrogensulfat und Schwefelsäure.

Aus dieser Lösung ließe sich Ammoniumsulfat durch zusätzliche Ammoniakzugabe bilden. Die Weiterverarbeitung der Ammoniumsulfatlösung durch Eindampfen zu festem Ammoniumsulfat ist aber bekanntlich sehr aufwendig. Die Nachteile dieser Konzeption werden dadurch vermieden, daß der die AK-Wäsche 30 verlassenden Lösung in einer Ca-Fällung 32 $Ca(OH)_2$ oder $CaCO_3$ zugegeben werden (beide Stoffe werden auch in der Rauchgaswäsche zur $SO_2$-Entfernung eingesetzt). Durch die Zugabe der Ca-Verbindungen wird bewirkt, daß sich aus Ammoniumsulfat Calciumsulfat (Gips) bildet, wobei Ammoniak freigesetzt wird, das durch Strippen aus der Lösung wieder entfernt und dem Rauchgas vor dem AK-Reaktor 12 wieder zugeführt wird. Dort muß ohnehin für die katalytische $NO_x$-Reduktion und die Rest-$SO_2$-Bindung $NH_3$ zugegeben werden, so daß durch Rückführung des $NH_3$ der Einsatz von frischem $NH_3$ vermindert wird. Die Ca-haltigen Abwässer aus der Ca-Fällung werden gemeinsam mit den aus der Rauchgaswäsche anfallenden Abwässern in einer Weiterverarbeitung 33 vorzugsweise zum Endprodukt Gips weiterverarbeitet. Somit wird eine getrennte Weiterverarbeitung der Schwefelverbindungen aus der Regeneration von Aktivkoks/Aktivkohle vermieden.

Eine bestehende Rauchgaswäsche 10 kann folglich in besonders vorteilhafter Weise durch eine katalytische $NO_x$-Reduktion an Aktivkohle/Aktivkoks ergänzt werden. Vergleicht man die in Figur 1 und 2 dargestellte Einrichtung zur kombinierten $SO_2$- und $NO_x$-Entfernung mit einer üblichen Rauchgaswäsche, die allein der Rauchgasentschwefelung dient, so zeigt sich, daß durch die neue technische Lehre dieser Verfahrenskombination eine synergistische Wirkung erzielt wird, denn neben der $NO_x$-Entfernung wird auch noch eine bessere $SO_2$-Abscheidung erreicht, weil in dem AK-Reaktor 12 zusätzlich das verbleibende Rest-$SO_2$ des Rauchgases weitestgehend abgeschieden wird.

Bestehende Rauchgaswäschen zur $SO_2$-Entfernung können auf die dargestellte Weise zur $NO_x$-Entfernung nachgerüstet werden, ohne daß ein zusätzlicher Aufwand für die Weiterverarbeitung des bei der Regeneration von Aktivkoks oder Aktivkohle anfallenden $SO_2$-Reichgases erforderlich wird.

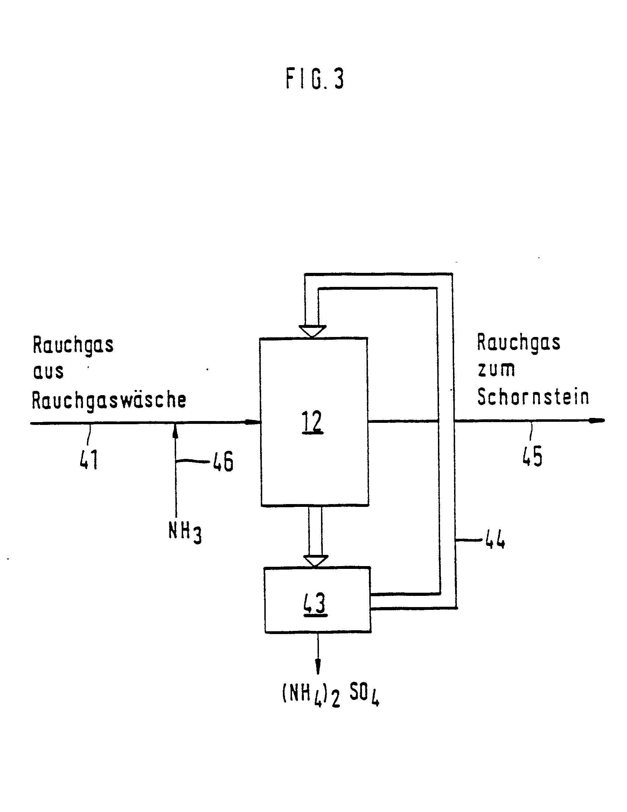

Aus Fig. 3 geht hervor, daß das Rauchgas aus der Rauchgaswäsche durch eine Leitung 41 in den AK-Reaktor 12 eingeführt wird. Dem Rauchgasstrom wird mittels einer Leitung 46 Ammoniak zugegeben. In dem AK-Reaktor 12 erfolgt die simultane Abscheidung von $NO_x$ und $SO_2$. Der den AK-Reaktor 2 verlassende, gereinigte Rauchgasstrom 45 ist teilweise vom $SO_2$ befreit. Die $NO_x$-Verringerung kann zwischen 20 und über 90 % betragen, je nach Ammoniakzugabe und Auslegung des AK-Reaktors 12.

Die Aktivkohle/der Aktivkoks im AK-Reaktor 12 wird zunehmend mit Ammoniumhydrogensulfat und Ammoniumsulfat beladen. Das Adsorptionsmittel wird kontinuierlich im Kreislauf geführt, wobei vom Adsorptionsmittel mit Hilfe von Sieb 43 das Ammoniumsulfat abgetrennt wird und das Adsorptionsmittel für den erneuten Einsatz dem Wanderschichtreaktor mit einer Leitung 44 wieder zugeführt wird. Das abgesiebte Ammoniumsulfat kann einer geeigneten Verwendung zugeführt werden.

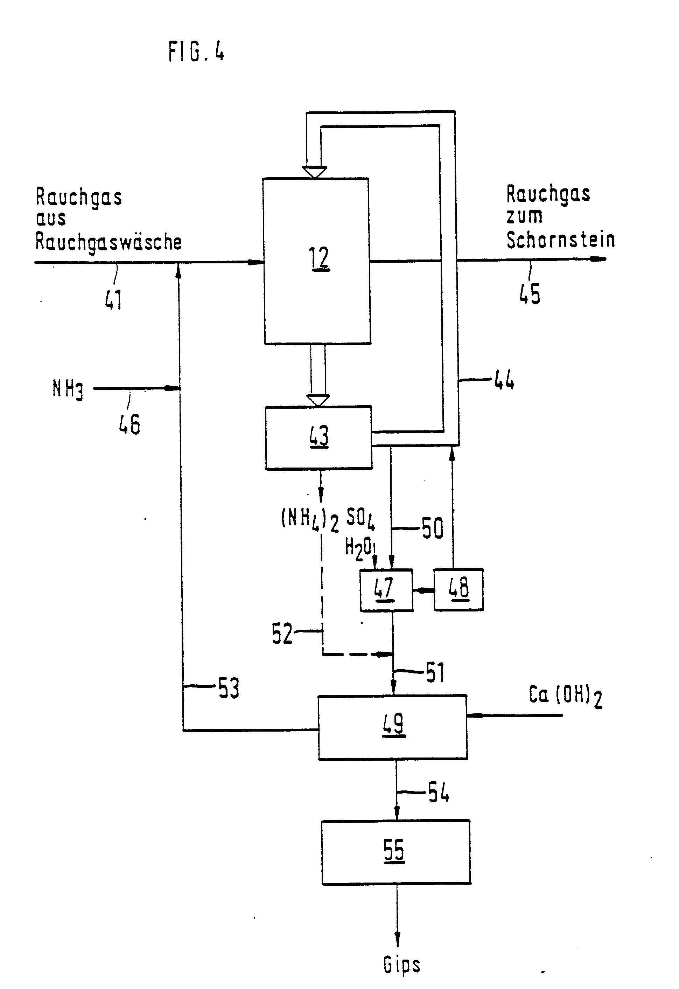

Gemäß Fig. 4 haben die Bezugszeichen 41 bis 46 die gleiche Bedeutung wie bei der in Fig. 3 beschriebenen Arbeitsweise. Darauf wird gemäß Figur 4 ein Teilstrom 50 des abgesiebten Adsorptionsmittels in einer Naßwäsche regeneriert. Diese Regeneration erfolgt durch Auswaschen mit Wasser in einer AK-Wäsche 47. Der Aktivkoks/die Aktivkohle muß vor dem Wiedereinsatz im AK-Reaktor 12 in einer gesonderten AK-Trocknung 48 von Wasser befreit werden. Die Waschlösung aus der AK-Wäsche 47 enthält neben Ammoniumsulfat auch Ammoniumhydrogensulfat und Schwefelsäure.

Auch bei dieser Lösungsvariante wird der die AK-Wäsche 47 durch eine Leitung 51 verlassenden Lösung in einer CA-Fällung 49 $Ca(OH)_2$ oder $CaCO_3$ zugegeben. In diese Lösung kann auch das abgesiebte Ammoniumsulfat über eine Leitung 52 geführt werden. Durch die Zugabe der Ca-Verbindungen wird bewirkt, daß sich aus Ammoniumsulfat Calciumsulfat (Gips) bildet, wobei Ammoniak freigesetzt wird, das durch Strippen aus der Lösung wieder entfernt und dem Rauchgas vor dem AK-Reaktor 12 durch eine Leitung 53 wieder zugeführt wird. Die Ca-haltigen Abwässer aus der Ca-Fällung werden mit Hilfe einer Leitung 54 gemeinsam mit den aus der Rauchgaswäsche anfallenden Abwässern in einer Weiterverarbeitung 55 vorzugsweise zum Endprodukt Gips weiterverarbeitet. Somit wird eine getrennte Weiterverarbeitung der Schwefelverbindungen aus der Regeneration von Aktivkoks/Aktivkohle vermieden.

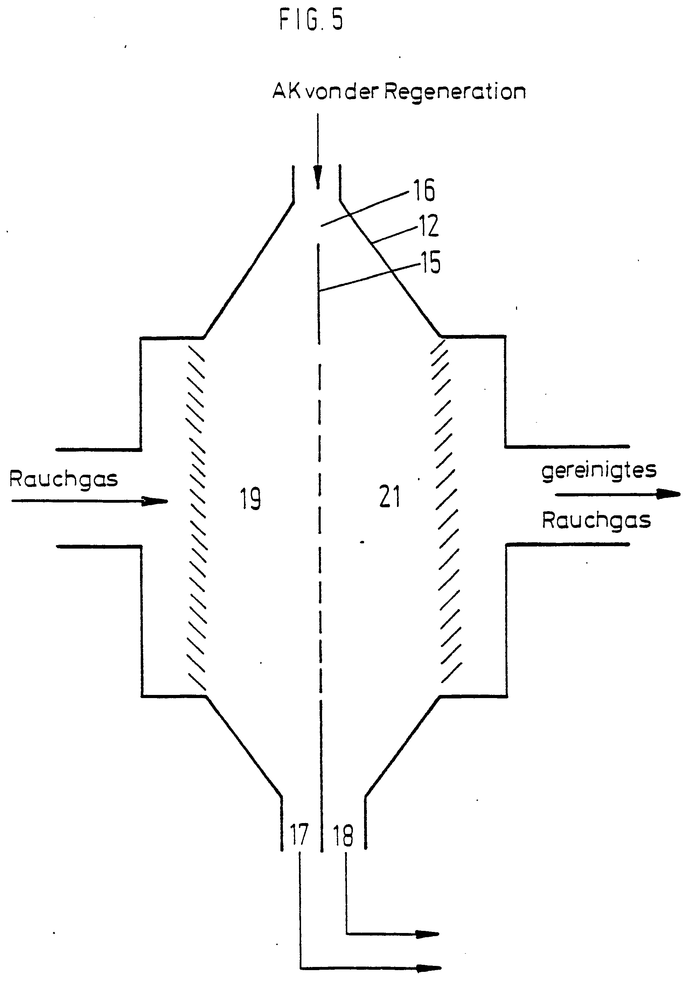

Besonders vorteilhaft ist es, wenn die Aktivkohle/Aktivkoks-Führung in einem AK-Reaktor 12 gemäß Figur 5 erfolgt. Es entspricht dem derzeitigen Stand der Technik, daß bei querdurchströmten Wanderbettreaktoren das körnige Adsorptions/Katalysatormaterial an einer Stelle am Kopf des Apparates zugegeben und an einer Stelle am Fuß abgezogen wird, um es zu regenerieren. Bei entsprechender Gestaltung der konischen Ein- und Auslaufteile fließt das körnige Material gleichmäßig durch den von seitlichen Jalousien begrenzten eigentlichen Adsorptions/Reaktionsraum. Die Fließgeschwindigkeit darf bestimmte Mindestgeschwindigkeiten nicht unterschreiten, wenn das zu reinigende Rauchgas Staub enthält

4

(Verstopfungen durch Staubablagerungen) oder eine gasförmige Komponente (wie hier das $SO_2$) adsorptiv abgeschieden wird (Verminderung der Adsorptionsfähigkeit). In beiden Fällen wird der in Strömungsrichtung des Gases gesehen rückwärtige Teil des Adsorptions/Reaktionsvolumens nicht hinreichend ausgenutzt, weil dort die Belastung geringer ist. Als Lösung wurde schon ein zweistufiger Betrieb in getrennten Adsorbern vorgeschlagen, wobei die Abzuggeschwindigkeit des geringer belasteten körnigen Adsorptionsmittels aus dem zweiten Adsorber niedriger ist als die aus dem ersten. Der Aufwand zweier getrennter Adsorber kann bei der in Figur 5 dargestellten Betriebsweise vermieden werden, wenn erfindungsgemäß ein Trennelement 15, das gas- aber nicht partikeldurchlässig ist, eingebaut wird. Das Trennelement 15 reicht in den oberen konischen Teil 16 des AK-Reaktors 12. Nach unten ist es fortgeführt bis zu getrennten Abzugseinheiten 17, 18 für das körnige Material. Über diese Abzugseinheiten wird das körnige Material mit unterschiedlichen Geschwindigkeiten abgezogen, um die unterschiedliche Belastung in den beiden Schichten 19, 21 auszugleichen.

Außerdem kann das Volumen des durchströmten Raumes durch das Trennelement 15 unterschiedlich aufgeteilt werden, wodurch eine weitere Ausgleichsmöglichkeit einer unterschiedlichen Belastung in den beiden Schichten 19, 21 gegeben ist. Als Trennelement 15 können spezielle Gitter oder auch Lochbleche dienen.

## Auslegungsbeispiel 1

In der Tabelle (Seite 17) und in Fig. 1 ist ein Auslegungsbeispiel einer Rauchgasreinigung gemäß der neuen technischen Lehre wiedergegeben. Dem Beispiel liegt ein bestimmter Rauchgasvolumenstrom zugrunde, hier 100.000 $m^3$/h (i.N.), mit einem vorgegebenen $SO_2$-Gehalt, hier 2 000 mg $SO_2$/$m^3$ (i.N.), und vorgegebenem $NO_x$-Gehalt, hier 1 200 mg $NO_x$/$m^3$ (i.N.), (der Anteil $NO_2$ an $NO_x$ beträgt ca. 8 Mol.-%) und mit einer Temperatur von 130 °C. Der Rauchgas-Hauptstrom 2 umfaßt einen Volumenstrom von 75.000 $m^3$/h (i.N.), während der im Bypaß geführte Rauchgas-Teilstrom 9 dementsprechend 25.000 $m^3$/h (i.N.) beträgt. Hinter dem Wärmeaustauscher 11 und vor der Naßwäsche 10 beträgt die Temperatur 85 °C, hinter der Rauchgaswäsche 65 °C. Durch die Wiederaufheizung im Wärmeaustauscher 11 wird die Temperatur auf 101 °C angehoben. Nach der Wiederzugabe des Rauchgas-Teilstroms 9 ergibt sich eine weitere Temperaturanhebung auf 108 °C, die für eine katalytische $NO_x$-Entfernung ausreicht. Im AK-Reaktor 12 erfolgt nochmals eine Temperaturanhebung auf 109 °C, so daß ein ausreichender Auftrieb für das gereinigte Rauchgas 8 im Schornstein gewährleistet ist.

In der Naßwäsche 10 wird der $SO_2$-Gehalt von 2 000 auf 200 mg $SO_2$/$m^3$ (i.N.) vermindert und der $NO_x$-Gehalt von 1 200 auf 1 140 mg $NO_x$/$m^3$ (i.N.) herabgesetzt. Durch Hinzufügen des oben erwähnten rückgeführten $SO_2$-Reichgasstroms 14 aus der AK-Regeneration 13 zum Rauchgas-Hauptstrom 2 erhöht sich der Rauchgas-Volumenstrom in der Naßwäsche 10 von 75.000 auf 76.000 $m^3$/h (i.N.).

Nach dem Zusammenführen des Rauchgas-Teilstroms 9 mit dem Rauchgas-Hauptstrom 2 wird der $SO_2$-Gehalt im vereinigten Rauchgasgesamtstrom 7 wieder auf 650 mg $SO_2$/$m^3$ (i.N.) erhöht und der $NO_x$-Gehalt von 1 140 auf 1 154 mg $NO_2$/$m^3$ (i.N.). Vor dem AK-Reaktor 12 erfolgt dann eine Herabsetzung des $SO_2$-Gehaltes auf 60 mg $SO_2$/$m^3$ (i.N.) und des $NO_x$-Gehaltes auf 200 mg $NO_2$/$m^3$ (i.N.). Beide Werte liegen wesentlich unter denen, die künftig mit 400 mg $SO_2$/$m^3$ (i.N.) bzw. 200 mg $NO_x$/$m^3$ (i.N.) Rauchgas angestrebt werden sollen.

## Auslegungsbeispiel 2

Dem Beispiel 2 liegen die gleichen Betriebsparameter (Tabelle Seite 19) zugrunde.

Gemäß Fig. 2 haben die Bezugszeichen die gleiche Bedeutung wie bei der in Fig. 1 beschriebenen Arbeitsweise.

Nach dem Zusammenführen des Rauchgas-Teilstroms 9 mit dem Rauchgas-Hauptstrom 2 wird der $SO_2$-Gehalt im vereinigten Rauchgasgesamtstrom 7 wieder auf 650 mg $SO_2$/$m^3$ (i.N.) erhöht und der $NO_x$-Gehalt von 1 140 auf 1 154 mg $NO_2$/$m^3$ (i.N.). Vor dem AK-Reaktor 12 erfolgt eine $NH_3$-Zugabe in einer Menge, daß sich ein $NH_3$-Gehalt im Rauchgas von 608 mg $NH_3$/$m^3$ (i.N.) ergibt. Im AK-Reaktor 12 erfolgt dann eine Herabsetzung des $SO_2$-Gehaltes auf 60 mg $SO_2$/$m^3$ (i.N.) und des $NO_x$-Gehaltes auf 200 mg $NO_2$/$m^3$ (i.N.). Beide Werte liegen wesentlich unter denen, die künftig mit 400 mg $SO_2$/$m^3$ (i.N.) bzw. 200 mg $NO_x$/$m^3$ (i.N.) Rauchgas angestrebt werden sollen.

Als Waschflüssigkeit für die Naßwäsche 30 zur AK-Regeneration werden 7,65 $m^3$ Wasser/h mit einem $NH_3$-Gehalt von 0,13 Mol/l benötigt.

## Auslegungsbeispiel 3

Rauchgas aus einer Kohlefeuerung verläßt eine Rauchgaswäsche mit wäßriger Calciumcarbonatlösung (Endprodukt aus der Wäsche nach Weiterverarbeitung der Waschlösung : Gips) in folgendem Zustand (nach der Wiederaufheizung) :

| | |
|---|---|
| Rauchgasvolumenstrom | 10.000 m h (i.N.) |
| Temperatur | 90 °C |

5

| Sauerstoffgehalt | 6,2 Vol.-% |
|---|---|
| Schwefeldioxidgehalt | 400 mg $SO_2/m^3$ (i.N.) |
| Stickoxidgehalt (5 % $NO_2$ am $NO_x$) | 800 mg $NO_2/m^3$ (i.N.) |

Dem Rauchgas werden 37,0 kg $NH_3$/h vor einem Wanderbettreaktor mit 2,0 m Schichttiefe und einer Querschnittsfläche (Anströmfläche) von 155 $m^2$ zugegeben. Der Wanderbettreaktor ist gefüllt mit Aktivkoks, der im Lieferzustand eine Schüttdichte von 580 kg/$m^3$ und eine spezifische Oberfläche von 450 $m^2$/g nach Brunauer, Emmett und Teller (DIN 66131) aufweist. Pro Stunde werden 4,7 $m^3$ Aktivkoks am unteren Reaktorende abgezogen, gesiebt (und dabei von Staub und an der äußeren Oberfläche anhaftendem Ammoniumsulfat befreit) und am oberen Kopf des Reaktors wieder zugeführt. Beim Absieben fallen 53,6 kg/h Ammoniumsulfat an.

Das gereinigte Rauchgas enthält nach dem Reaktor an Stickoxiden, gerechnet als $NO_2$, 190 mg $NO_2/m^3$ (i.N.) ($NO_2$-Anteil am $NO_x$ kleiner als 1 %) und 140 mg $SO_2/m^3$ (i.N.).

Auslegungsbeispiel 4
(Vergleichsbeispiel zu Beispiel 3)

Das Rauchgas verläßt die Rauchgaswäsche unter denselben Bedingungen wie im Beispiel 3. Der Wanderbettreaktor hat wie im Beispiel 3 eine Anströmfläche von 155 $m^2$ und eine Schichttiefe von 2,0 m. Er wird von oben mit einem regenerierten Aktivkoks beschickt, der im Lieferzustand eine Schüttdichte von 580 kg/$m^3$ und eine spezifische Oberfläche von 450 $m^2$/g nach Brunauer, Emmett und Teller (DIN 66131) aufweist. Dem Rauchgas werden vor dem Wanderbettreaktor 42,3 kg $NH_3$/h zudosiert. Pro Stunde werden 3,4 $m^3$ Aktivkoks am unteren Ende des Reaktors abgezogen und erneut in die Regenerationsstufe überführt. Dabei wird das adsorbierte Ammoniumsulfat entfernt.

Den Reaktor verläßt ein Rauchgas, das 190 mg $NO_2/m^3$ (i.N.) ($NO_2$-Anteil am $NO_x$ kleiner als 1 %) und weniger als 40 mg $SO_2/m^3$ (i.N.) aufweist.

Die Beispiele belegen, daß bei einer Kreislaufführung des Aktivkokses ohne aufwendige Regeneration (Beispiel 3) außerdem die zuzudosierende $NH_3$-Menge geringer als im Beispiel 4 (mit Regeneration) ist, wobei die $NO_x$-Abscheidung gleich gut ist. Im Beispiel 4 werden zwar günstigere $SO_2$-Werte erreicht, jedoch liegt die $SO_2$-Abscheidung in Beispiel 3 noch weit unter den vom Gesetzgeber geforderten Werten.

Auslegungsbeispiel 5

In einem AK-Reaktor 12 ohne Trennelement 15 und mit gleichmäßigen AK-Abzug am Reaktorfuß ergäbe sich bei einer Bett-tiefe von 1,75 m ein AK-Reaktionsvolumen von 270 $m^3$. Die zur Regeneration abzuführende AK-Menge würde 3,8 $m^3$/h betragen.

Unter vergleichbaren Bedingungen ergeben sich bei einer Verwendung des erfindungsgemäßen AK-Reaktors 12 mit Trennelement 15 und getrennten AK-Abzugseinheiten 17, 18 aus den beiden Schichten 19, 21 folgende Werte : Bei einer Gesamtbettiefe von 1,75 entfallen auf die Bettiefe an der Gaseintrittsseite 0,77 m und auf die Bettiefe auf der Gasaustrittsseite 0,98 m, was wiederum einem AK-Gesamtvolumen von 270 $m^3$ entspricht. Wegen der möglichen unterschiedenlichen Abzugsgeschwindigkeit aus den beiden Schichten 19, 21 werden auf der Gaseintrittsseite 1,35 $m^3$/h und auf der Gasaustrittsseite 0,95 $m^3$/h abgezogen, was einer Gesamtmenge von 3,3 $m^3$/h AK entspricht, die zur Regeneration abzuführen sind.

Hieraus ergibt sich, daß die pro Stunde zu regenerierende AK-Menge im Falle des erfindungsgemäßen AK-Reaktors 12 um 0,5 $m^3$/h niedriger ist als im Vergleichsbeispiel unter Verwendung eines Reaktors gemäß dem Stand der Technik.

Hieran schließen sich die Seiten 17 bis 20 in neuer Zählung an.

1,75 entfallen auf die Bettiefe an der Gaseintrittsseite 0,77 m und auf die Bettiefe auf der Gasaustrittsseite 0,98 m, was wiederum einem AK-Gesamtvolumen von 270 $m^3$ entspricht. Wegen der möglichen unterschiedlichen Abzugsgeschwindigkeit aus den beiden Schichten 19, 21 werden auf der Gaseintrittsseite 1,35 $m^3$/h und auf der Gasaustrittsseite 0,95 $m^3$/h abgezogen, was einer Gesamtmenge von 3,3 $m^3$/h AK entspricht, die zur Regeneration abzuführen sind.

Hieraus ergibt sich, daß die pro Stunde zu regenerierende AK-Menge im Falle des erfindungsgemäßen AK-Reaktors 12 um 0,5 $m^3$/h niedriger ist als im Vergleichsbeispiel unter Verwendung eines Reaktors gemäß dem Stand der Technik.

(Siehe Tabelle Seite 7 f.)

Auslegungsbeispiel entsprechend Fig. 1 und 2

|  | Volumenstrom $m^3$/h (i.N.) | $SO_2$-Gehalt mg $SO_2$/$m^3$ (i.N.) | $NO_x$-Gehalt mg $NO_2$/$m^3$ (i.N.) | Temperatur °C |
|---|---|---|---|---|
| Rauchgas-Gesamtstrom hinter Feuerung 1 | 100.000 | 2000 | 1200 | 130 |
| Rauchgas-Hauptstrom 2 vor Wärmeaustauscher 11 | 75.000 | 2000 | 1200 | 130 |
| Rauchgas-Hauptstrom 2 hinter Wärmeaustauscher 11 | 75.000 | 2000 | 1200 | 35 |
| Rauchgas-Hauptstrom 2 nach Naßwäsche 10 | 76.000 | 200 | 1140 | 65 |
| Rauchgas-Hauptstrom 2 nach Wiederaufheizung im Wärmeaustauscher 11 | 76.000 | 200 | 1140 | 101 |
| Rauchgas-Teilstrom 9 im Bypass | 25.000 | 2000 | 1200 | 130 |
| Vereinigter Rauchgas-Gesamtstrom 7 vor AK-Reaktor 12 | 101.000 | 650 | 1154 | 108 |
| Gereinigter Rauchgasstrom 8 hinter AK-Reaktor 12 | 101.000 | 60 | 200 | 109 |

**Patentansprüche**

1. Verfahren zur Abscheidung von $SO_2$ und $NO_x$, insbesondere aus Rauchgasen, wobei in einer ersten Stufe die Hauptmenge des $SO_2$ und ein geringerer Anteil des $NO_x$ aus dem Rauchgas abgeschieden und in einer zweiten Stufe die Hauptmenge des $NO_x$ aus dem Rauchgas an Aktivkohle/Aktivkoks in einem Reaktor unter Ammoniakzugabe katalytisch und das Rest-$SO_2$ durch Reaktion mit dem Ammoniak abgetrennt wird, gekennzeichnet durch

a) Aufteilung des Rauchgasgesamtstroms aus der Feuerung, in einen Rauchgas-Hauptstrom und in einen Rauchgas-Teilstrom,

b) Abscheidung der Hauptmenge des $SO_2$ und eines geringeren Anteils des $NO_x$ aus dem Rauchgas-Hauptstrom in einer Naßwäsche mit anschließender Wiederaufheizung des Rauchgas-Hauptstromes ;

c) Zusammenführung des Rauchgas-Hauptstromes mit dem im Bypaß an der Naßwäsche vorbeigeführten Rauchgas-Teilstrom.

2. Verfahren nach Anspruch 1, gekennzeichnet durch eine thermische Regeneration der Aktivkohle/des Aktivkokses und Erzeugung eines $SO_2$-Reichgases sowie Zusammenführung des $SO_2$-Reichgasstromes mit dem Rauchgas-Hauptstrom vor der Naßwäsche.

3. Verfahren nach Anspruch 1, gekennzeichnet durch Regeneration der Aktivkohle/des Aktivkokses in einer Naßwäsche mit angeschlossener Aktivkohle/Aktivkoks-Trocknung und -Rückführung in den Reaktor, Aufarbeitung der Waschflüssigkeit der AK-Wäsche durch Ca(OH)$_2$- oder CaCO$_3$-Zugabe (Ca-Fällung) und Rückführung des Ammoniaks und gemeinsame Weiterverarbeitung der Waschflüssigkeiten aus der SO$_2$-Wäsche und der AK-Wäsche zu Gips.

4. Verfahren nach Anspruch 1, dadurch gekennzeichnet, daß die beladene Aktivkohle, der beladene Aktivkoks aus dem Reaktor über ein Sieb geführt und dadurch Ammoniumsulfat abgetrennt wird und das gereinigte Adsorptionsmittel für den erneuten Einsatz dem Reaktor wieder zugeführt wird.

5. Verfahren nach Anspruch 4, dadurch gekennzeichnet, daß ein Teilstrom des gereinigten Adsorptionsmittels einer Naßwäsche zugeführt wird, anschließend getrocknet und ebenfalls dem Reaktor wieder zugeführt wird.

6. Verfahren nach Anspruch 4, dadurch gekennzeichnet, daß das abgesiebte Ammoniumsulfat in Lösung gebracht und das Ammoniak abgetrieben und in den Verfahrensgang zurückgeführt wird.

7. Verfahren nach Anspruch 5, dadurch gekennzeichnet, daß aus dem Ammoniumsulfat des Waschwassers Ammoniak abgetrieben und in den Verfahrensgang zurückgeführt wird.

8. Verfahren nach einem oder mehreren der Ansprüche 1 bis 7, dadurch gekennzeichnet, daß die zweite Stufe in einem Reaktor (12) durchgeführt wird, der ein gasdurchlässiges Trennelement (15) aufweist, das den Reaktor (12) in zwei Räume (19/21) teilt, die getrennte Abzüge (17/18) für die Aktivkohle/den Aktivkoks haben.

## Claims

1. A process for separating SO$_2$ and NO$_x$, in particular from flue gases, according to which, in a first stage, the bulk of the SO$_2$ and a relatively small proportion of the NO$_x$ are separated from the flue gas and, in a second stage, the bulk of the NO$_x$ is separated catalytically from the flue gas with activate carbon/activate coke in a reactor by the addition of ammonia and the remaining SO$_2$ is separated by reaction with the ammonia, characterised by

   a) division of the total stream of flue gas from the combustion zone into a main flue gas stream and a partial flue gas stream,

   b) separation of the bulk of the SO$_2$ and of a relatively small portion of the NO$_x$ from the main flue gas stream in a wet bath with subsequent re-heating of the main flue gas stream,

   c) combination of the main flue gas stream with the partial flue gas stream conducted in the bypass past the wet washer.

2. A process according to Claim 1, characterised by thermal regeneration of the activate carbon/activate coke and generation of an SO$_2$-rich gas and combination of the SO$_2$-rich gas with the main flue gas stream upstream of the wet washer.

3. A process according to Claim 1, characterised by regeneration of the activate carbon/activate coke in a wet washer followed by drying and returning to the reactor of the activate carbon/activate coke, reconditioning of the washing fluid of the activate carbon/coke washer by the addition of Ca(OH)$_2$ — or CaCO$_3$ — (Ca separation) and return of the ammonia and common further processing of the washing fluids from the SO$_2$ washer and the activate carbon/coke washer into calcium sulphate.

4. A process according to Claim 1, characterised in that the charged activate carbon, the charged activate coke from the reactor is passed over a sieve and ammonium sulphate is thereby separated and the purified adsorption agent is returned to the reactor for re-use.

5. A process according to Claim 4, characterised in that a partial stream of the purified adsorption agent is supplied to a wet washer, then dried and also returned to the reactor.

6. A process according to Claim 4, characterised in that the sieved-off ammonium sulphate is made into a solution and the ammonia removed and returned to the processing cycle.

7. A process according to Claim 5, characterised in that ammonia is extracted from the ammonium sulphate of the washer and is fed back into the processing cycle.

8. A process according to one or more of claims 1 to 7, characterised in that the second stage is carried out in a reactor (12) having a gas-permeable separating element (15) dividing the reactor (12) into two chambers (19/21) which have separate outlets (17/18) for the activate coal/activate coke.

## Revendications

1. Procédé de séparation de SO$_2$ et de NO$_x$, plus particulièrement de gaz de fumée, conformément auquel, au cours d'une première étape, on sépare la majeure partie du SO$_2$ et une fraction plus faible du NO$_x$ du gaz de fumée et, au cours d'une seconde étape, on sépare catalytiquement la majeure partie du NO$_x$ du gaz de fumée sur du charbon activé/coke activé, dans un réacteur, sous addition d'ammoniac et le SO$_2$ résiduel par réaction sur l'ammoniac, caractérisé par

   a) la subdivision du courant global de gaz de fumée provenant du foyer, en un courant principal de gaz de fumée et en un courant partiel de gaz de fumée,

b) la séparation de la partie principale du $SO_2$ et d'une fraction plus faible du $NO$, du courant principal de gaz de fumée au cours d'un lavage à l'état humide avec réchauffage subséquent du courant principal de gaz de fumée,

c) la réunion du courant principal de gaz de fumée avec le courant partiel de gaz de fumée détourné en dérivation du lavage à l'état humide.

2. Procédé suivant la revendication 1, caractérisé par une régénération thermique du charbon activé/du coke activé et l'obtention d'un gaz riche en $SO_2$, comme aussi d'une réunion du gaz riche en $SO_2$ au courant principal de gaz de fumée avant le lavage à l'état humide.

3. Procédé suivant la revendication 1, caractérisé par la régénération du charbon activé/du coke activé dans un lavage à l'état humide, avec séchage et renvoi du charbon activé/coke activé subséquents dans le réacteur, traitement du liquide de lavage du lavage de Ca par addition de $Ca(OH)_2$ — ou $CaCO_3$ — (précipitation du Ca) et recyclage de l'ammoniac et poursuite commune du traitement des liquides de lavage provenant du lavage du $SO_2$ et du lavage de Ca en gypse.

4. Procédé suivant la revendication 1, caractérisé en ce que le charbon activé chargé, le coke activé chargé du réacteur sont conduits sur un tamis ou crible et ensuite séparés du sulfate d'ammonium et l'agent d'adsorption épuré est renvoyé au réacteur en vue d'une nouvelle utilisation.

5. Procédé suivant la revendication 4, caractérisé en ce qu'un courant partiel de l'agent d'adsorption épuré est envoyé à un lavage à l'état humide, ensuite séché et éventuellement réintroduit dans le réacteur.

6. Procédé suivant la revendication 4, caractérisé en ce que le sulfate d'ammonium séparé par tamisage ou criblage est amené en solution et l'ammoniac est séparé et renvoyé dans le procédé.

7. Procédé suivant la revendication 5, caractérisé en ce que l'on sépare l'ammoniac du sulfate d'ammonium de l'eau de lavage et on le renvoie dans le procédé.

8. Procédé suivant une ou plusieurs des revendications 1 à 7, caractérisé en ce que l'on réalise la seconde étape dans un réacteur (12) qui présente un élément de séparation ou séparateur (15) perméable aux gaz, qui divise le réacteur (12) en deux espaces ou enceintes (19/21) qui comportent des évacuations séparées (17/18) pour le charbon activé/le coke activé.

## Fig.1

SO₂ Reichgas

13

Rauchgas aus Brenner

14

12

8

7

NH₃

Rauchgas zum Schornstein

11

Reagens

2

10

1

9    2

20

Reagens zur Weiterverarbeitung

# FIG. 2

# FIG.3

Rauchgas aus Rauchgaswäsche

41

46

$NH_3$

12

43

44

Rauchgas zum Schornstein

45

$(NH_4)_2 SO_4$

3

FIG. 4

Rauchgas
aus
Rauchgaswäsche
41

NH3
46

12

Rauchgas
zum
Schornstein
45

44

43

$(NH_4)_2 SO_4$
$H_2O$

50

47

48

52

51

53

49

Ca (OH)$_2$

54

55

Gips

FIG. 5

AK von der Regeneration

16
12
15

Rauchgas

19    21

gereinigtes
Rauchgas

17  18